# EUROPÄISCHE PATENTSCHRIFT

(11) **EP 0 428 952 B1**
(45) Veröffentlichungstag und Bekanntmachung des Hinweises auf die Patenterteilung: **17.05.1995**
(21) Anmeldenummer: 90121520.2
(22) Anmeldetag: 10.11.1990
(51) Int. Cl.: G01P 15/08

(54) **Beschleunigungsgeber**
Accelerometer
Accéléromètre

(30) Priorität: 21.11.1989 DE 3938601
(43) Veröffentlichungstag der Anmeldung: 29.05.1991
(73) Patentinhaber: Mannesmann Kienzle GmbH (HR B1220), 78052 Villingen-Schwenningen (DE)
(72) Erfinder: Hilger, Gernot, Dipl.-Phys., W-7218 Trossingen (DE); Schmid, Mechtilde, Dipl.-Ing., W-7730 Villingen-Schwenningen (DE); Schultze, Hartmut, Dipl.-Ing., W-7730 Villingen-Schwenningen (DE)

(56) Entgegenhaltungen:
- DE-U- 8 909 652
- US-A- 2 841 386
- US-A- 2 870 422

## Beschreibung

Die Erfindung betrifft einen Beschleunigungsgeber mit einer Feder-Masse-Baugruppe, einer Spulenanordnung und einem bandförmigen Meßkörper aus amorphem, magneto-elastischem Metall, wobei ein Ende des mit der Spulenanordnung elektromagnetisch gekoppelten Meßkörpers mit der Masse und das andere Ende mit einem relativ zur Spulenanordnung unbeweglichen Bauteil des Beschleunigungsgebers verbunden ist und die Masse, die eine zentrale Freisparung aufweist, die größer ist, als die Außenkonturen der Spulenanordnung, die Spulenanordnung wenigstens teilweise umgreift.

Derartige nach dem magneto-elastischen Prinzip wirkende Beschleunigungs- bzw. Kraftgeber weisen eine besondere Eignung für den Einsatz in einem rauhen Milieu, beispielsweise im Kraftfahrzeug, deshalb auf, weil das eigentliche Meßelement, der im folgenden als Band bezeichnete bandförmige Meßkörper, aus amorphem Metall sich durch besonders gute Korrosionsbeständigkeit und Lastwechselfestigkeit auszeichnet, das mit dem Band gebildete Meßsystem eine hohe Empfindlichkeit aufweist und ein damit ausgerüsteter Beschleunigungsgeber im Prinzip auf einfache Weise justierbar ist. Eine Eignung des Bandes aus amorphem Metall speziell für Beschleunigungsgeber ist im übrigen auch dadurch gegeben, daß das Band mit 20 bis 30 »m äußerst dünn und somit extrem massearm herstellbar ist und dem Beschleunigungsgeber eine besonders gut ausgeprägte Richtwirkung verleiht. Diese Eigenschaft ist insbesondere für eine Anwendung im Kraftfahrzeug, wo ein hoher mechanischer Störpegel gegeben ist, von Vorteil.

Soll die Anwendung von Beschleunigungsgebern im Kraftfahrzeug der Unfalldatenerfassung dienen oder Informationen des Fahrers über Fahrfehler oder über gefährliche Fahrsituationen auslösen, so sind für ein zweifelfreies, objektives Erkennen solcher Fahrsituationen mehrere Beschleunigungsgeber erforderlich, die Beschleunigungen beispielsweise in der Längs-, der Quer- und der Hochachse des Fahrzeuges ermitteln, d. h. derartige Beschleunigungsgeber müssen als Elemente eines Datenerfassungskonzeptes trotz hoher Präzision kostengünstig herstellbar sein, d. h. ihre Herstellung muß den Bedingungen der Großserienfertigung, was möglichst einfache Bauteile und nach Möglichkeit maschinelle Montierbarkeit bedeutet, gerecht werden.

Mit dem DE-U 89 09 652 ist ein Beschleunigungsgeber gemäß dem Gattungsbegriff des Anspruchs 1 bekannt geworden, bei dem die Spule in einer zylindrischen Hülse angeordnet und die bewegliche Masse unter Zwischenschaltung von Kugellagern auf der Hülse gelagert ist. Insbesondere die Art der Lagerung verursacht einen erheblichen Montageaufwand und läßt eine maschinelle Montage nicht zu.

Ferner zeigt die US-A 2 870 422 einen Beschleunigungsgeber, der abgesehen davon, daß der Meßkörper aus lamellierten Blechen aufgebaut ist, eine Vielzahl von Bauteilen und einen erheblichen Raumbedarf aufweist. Außerdem ist der Aufbau dieses Beschleunigungsgebers für eine Großserienfertigung ungeeignet.

Der vorliegenden Erfindung war die Aufgabe gestellt, eine Architektur für einen Beschleunigungsgeber zu schaffen, durch welche die Vorzüge des bandförmigen Meßkörpers optimal nutzbar sind, die Empfindlichkeit gegenüber der Wirkung von Querkräften weitgehend reduziert ist und welche eine Fertigung in Großserie gestattet.

Die Lösung der Aufgabe sieht vor, daß die Feder-Masse-Baugruppe zwei Membranfedern aufweist, welche parallel zueinander an der Masse befestigt sind und an welchen die Masse relativ zur Spulenanordnung beweglich aufgehängt ist, daß den Membranfedern eine Stützhülse zugeordnet ist, deren Länge dem gegenseitigen Abstand der Membranfedern und deren Außendurchmesser dem Durchmesser der Membranfedern entspricht und daß ein mit der Stützhülse verbindbarer Träger vorgesehen ist, an welchem Mittel für eine freitragende Aufnahme der Spulenanordnung sowie zur Befestigung des einen Endes des Bandes ausgebildet sind.

Die gefundene Lösung bietet eine insbesondere für die Verwendung eines bandförmigen Meßkörpers optimierte Ausbildung und Halterung, die die Wirkung von Kippmomenten vermeidet und und eine hohe Querstabilität aufweist.

Vorteilhaft ist ferner, daß die wesentlichen Bauteile des Beschleunigungsgebers sozusagen in einer Richtung montierbar sind, wobei eine selbsttätige Zentrierung und Ausrichtung bezüglich der Befestigungsstellen des Bandes und des in der Spulenanordnung vorgesehenen, relativ schmalen Spaltes, in dem das Band berührungsfrei angeordnet sein muß, erfolgt. Auch bietet die Bauform des erfindungsgemäßen Beschleunigungsgebers eine gute Reproduzierbarkeit und die Möglichkeit, die Montage zu mechanisieren, d. h. es werden keine ausschließlich der Spulenanordnung und/oder der Feder-Masse-Baugruppe zugeordnete Befestigungselemente verwendet, die Anzahl der Bauteile ist weitgehend reduziert und kompliziert gebaute Bauteile sind vermieden. Ferner sind die Bauteile derart gestaltet, daß sie wenn möglich steckbar verbindbar sind und daß Toleranzadditionen beispielsweise durch Verwenden eines Trägers, welchem die Feder-Masse-Baugruppe, die Spulenanordnung und Mittel zur Befestigung des einen Bandendes zugeordnet sind, vermieden werden.

Eine besonders vorteilhafte Bauform, die eine größtmögliche Bauraumverdichtung und somit geringe Bauhöhe ermöglicht, stellt die koaxiale Anordnung von Spulenanordnung und Feder-Masse-Baugruppe dar. Bei dieser Bauform bildet die Stützhülse sowohl ein tragendes Bauteil als auch ein Bezugsbauteil, an welchem die übrigen Baugruppen und Bauteile unabhängig voneinander befestigt und auf diese Weise die Montagetoleranzen so gering wie möglich gehalten werden.

Vorteilhaft ist ferner, daß bei dieser Bauform für das gegenseitige Verbinden der einzelnen Bauteile und Baugruppen sowie für das Festlegen des nach dem Zusammenbau zunächst drehbeweglichen Wickeldorns lediglich eine Verbindungstechnik, nämlich Warmstauchen bzw. Schweißen, angewandt wird.

Außerdem bietet die gefundene Lösung den Vorteil, daß noch nach dem Befestigen des Bodenteils eine mechanische Justierung des Beschleunigungsgebers in Form einer Wegmessung erfolgen kann, indem der Wickeldorn in diesem Montagezustand noch frei zugänglich ist und auf der Gegenseite durch eine im Bodenteil befindliche Bohrung mittels eines geeigneten Tasters die Stellung der Feder-Masse-Baugruppe festgestellt werden kann.

Im folgenden sei ein erfindungsgemäßer Beschleunigungsgeber anhand der beigefügten Zeichnungen näher erläutert. Es zeigen
FIGUR 1 einen Längsschnitt des Beschleunigungsgebers,
FIGUR 2 eine teilweise angeschnittene, stirnseitige Ansicht des Beschleunigungsgebers gemäß der Pfeilrichtung in FIGUR 1,
FIGUR 3 eine Ansicht einer Membranfeder der Feder-Masse-Baugruppe,
FIGUR 4 Ansichten von einzelnen, montagefertig einander zugeordneten Bauteilen und Baugruppen des Beschleunigungsgebers gemäß den FIGUREN 1 und 2.

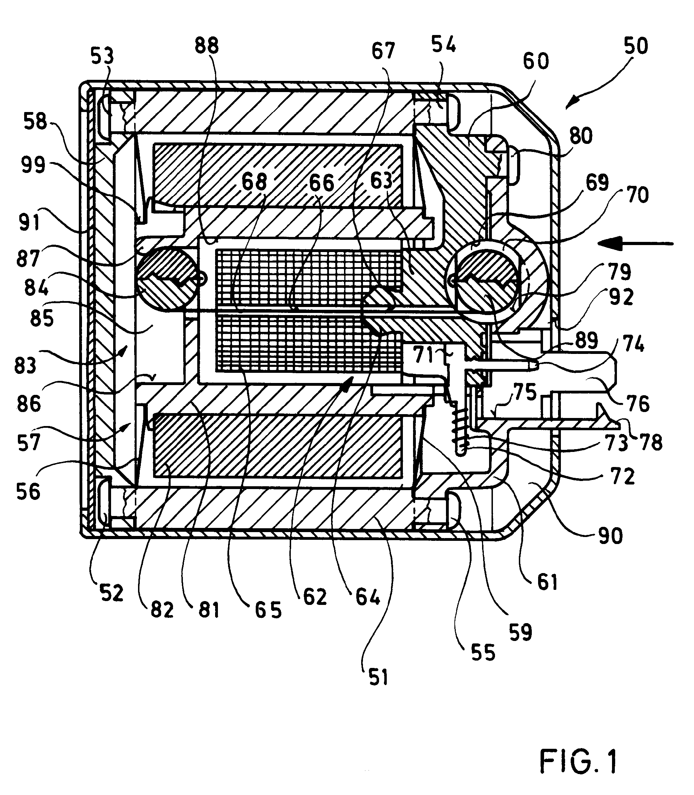

Wie die FIGUR 1 zeigt, weist der Beschleunigungsgeber 50 eine Stützhülse 51 auf, an deren Stirnseiten jeweils mehrere Zapfen 52, 53, 54, 55 unmittelbar angeformt sind. Eine erste Serie von Zapfen, von denen in FIGUR 1 zwei, 52 und 53, dargestellt sind, dient einerseits der Halterung der einen Membranfeder 56 der Feder-Masse-Baugruppe 57, andererseits dem Befestigen eines Bodenteils 58, indem an den durch das Bodenteil 58 hindurchgreifenden Zapfen 52 und 53 durch Warmstauchen "Nietköpfe" angeformt werden.

Eine zweite Serie von Zapfen mit ungleichem Teilungsabstand, von denen einer mit 54 bezeichnet ist, sowie eine dritte an der gleichen Stirnseite der Stützhülse 51 angeformte Serie von Zapfen, für die stellvertretend einer mit 55 bezeichnet ist, dienen einerseits der Halterung der anderen Membranfeder 59, andererseits der spielfreien Zuordnung und der Befestigung der Feder-Masse-Baugruppe 57 an einem Träger 60 und der Befestigung einer dem Träger 60 zugeordneten Abdeckung 61, und zwar ebenfalls in der bereits beschriebenen Weise durch Warmstauchen.

Der Träger 60 ist bei diesem Ausführungsbeispiel derart geformt, daß eine koaxiale Anordnung von Feder-Masse-Baugruppe 57 und Spulenanordnung 62 mit einer besonders geringen Bauhöhe erzielbar ist. D. h. an dem flanschartig gestalteten Träger 60 ist ein Ansatz 63 mit einem Aufnahmezapfen 64 ausgebildet, an welchem eine Flachspule 65, die je nach der vorgesehenen Meßwertverarbeitung aus einer oder mehreren Wicklungen gebildet sein kann, unmittelbar fliegend angeformt ist.

Dabei ist die Spulenanordnung 62 mit einem relativ schmalen Luftspalt 66 ausgebildet, der mit einem in dem Träger 60 befindlichen Spalt 67 fluchtet und der der reibungsfreien Durchführung eines als Meßkörper dienenden Bandes 68 dient, wobei bei dem zu beschreibenden Ausführungsbeispiel die Breite des Spaltes 67 in der Größenordnung von 5 mm, die besonders sensible Größe, nämlich die Höhe des Spaltes im unteren Zehntelmillimeterbereich ausgebildet sind.

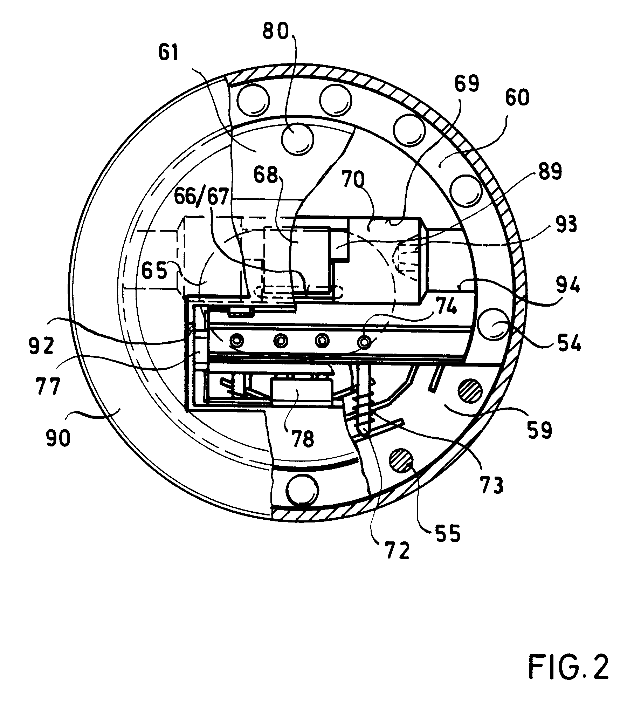

An dem Träger 60 ist ferner eine Lagerschale 69 für einen das eine Bandende aufnehmenden Wickeldorn 70 angeformt. Außerdem sind mehrere der Flachspule 65 zugeordnete Kontaktelemente, von denen eines mit 71 bezeichnet ist, in den Träger 60 eingebettet. Dabei dienen an den Kontaktelementen 71 ausgebildete Zungen 72 dem Anbringen der Enden der Wicklungsdrähte 73, während ebenfalls an den Kontaktelementen 71 ausgebildete Stifte 74 einem nicht dargestellten, von außen an dem Beschleunigungsgeber 50 anzubringenden Stecker zugeordnet sind. Die Steckerfassung ist in der Abdeckung 61 ausgeformt und mit 75 bezeichnet. Die Führungs- und Haltefunktion der Steckerfassung 75 ist durch ebenfalls unmittelbar an der Abdeckung 61 ausgebildete Zungen 76 und 77 (FIGUR 2) sowie einen federnden Riegel 78 verstärkt. Ferner ist in der Abdeckung 61 eine der Lagerschale 69 zugeordnete Lagerschale 79 ausgebildet. Dabei sind die Maße zwischen dem Wickeldorn 70 und der Lagerschale 69 derart gewählt, daß beim Verbinden der Abdeckung 61 mit der Stützhülse 51 und mit dem Träger 60, wozu ein am Träger 60 ausgebildeter Zapfen 80 dient, ein Festspannen des Wickeldorns 70 erfolgt und somit für das Spannen des Bandes 68 durch Drehen des Wickeldorns 70 eine Friktionswirkung gegeben ist.

Wie bereits beschrieben, sind die Membranfedern 56 und 59 durch die an den Stirnseiten der Stützhülse 51 ausgebildeten Zapfen 52, 53 sowie 54, 55 an ihrem äußeren Rand gehaltert und parallel zueinander angeordnet. Ein mit beiden Membranfedern 56 und 59 verbundener Halter 81 dient einerseits der Aufnahme der seismischen Masse 82, andererseits eines dem anderen Bandende zugeordneten Wickelkörpers 83. Dieser weist einen zylindrischen Abschnitt 84 und stirnseitige Wangen auf, von denen in FIGUR 1 eine mit 85 bezeichnet ist. Für die Befestigung des Wickelkörpers 83 ist im Halter 81 eine passende Kulisse 86 ausgebildet, in der der Wickelkörper 83 unter der Wirkung der Zugspannung des Bandes 68 festgehalten wird. Mit 87 ist ein federnder Niederhalter bezeichnet, der auf den auf dem zylindrischen Abschnitt 84 des Wickelkörpers 83 mehrlagig aufgewickelten Bandwickel nach dem Einsetzen des Wickelkörpers 83 in den Halter 81 einwirkt und so ein Aufspringen des Bandwickels vermeidet.

Wie aus FIGUR 1 ferner ersichtlich ist, ist der Halter 81 mit einer zentralen Freisparung 88 versehen, wodurch eine koaxiale Anordnung von Feder-Masse-Baugruppe 57 und Spulenanordnung 62 ermöglicht wird.

Ferner sei erwähnt, daß der zylindrische Abschnitt 84 des Wickelkörpers 83 und ein zylindrischer Abschnitt 89 des Wickeldorns 70 zweiteilig ausgebildet sind. Die beiden Teile sind jeweils mittels eines Filmscharniers miteinander verbunden, und an den gegeneinander weisenden Flächen sind für ein sicheres Festlegen der Bandenden im einzelnen nicht bezeichnete Kerbverzahnungen ausgebildet. Ein mit 90 bezeichnetes, haubenförmiges Gehäuse aus einem magnetisch hochleitfähigen Werkstoff, beispielweise aus Mumetall, dient der magnetischen Abschirmung. Das haubenförmige Gehäuse 90 ist unter Zwischenlage einer ebenfalls aus magnetisch hochleitfähigem Werkstoff hergestellten Platte 91 mit dem Bodenteil 58 verbördelt und weist einen Durchbruch 92 auf, über den die Steckerfassung 75 zugänglich ist.

Der schichtweise Schnitt des Beschleunigungsgebers 50 gemäß FIGUR 2 zeigt stirnseitige Teilansichten von dem haubenförmigen Gehäuse 90, der Abdeckung 61, dem Träger 60 mit in der Lagerschale 69 befindlichem Wickeldorn 70 und der Membranfeder 59.

Aus der FIGUR 2 ist ersichtlich, daß der Wickeldorn 70 stirnseitig mit Kreuzschlitzen 93 versehen ist, damit er zum Spannen des Bandes 68 betätigt werden kann. Die Kreuzschlitze 93 sind durch jeweils eine Öffnung - in FIGUR 2 ist die im Träger 60 ausgebildete eine Hälfte der Öffnung mit 94 bezeichnet - zugänglich, wobei der Durchmesser der Öffnungen kleiner ist als der Durchmesser des Wickeldorns 70. Auf diese Weise ist der in den Lagerschalen 69 und 79 gelagerte Wickeldorn 70 auch in axialer Richtung gesichert.

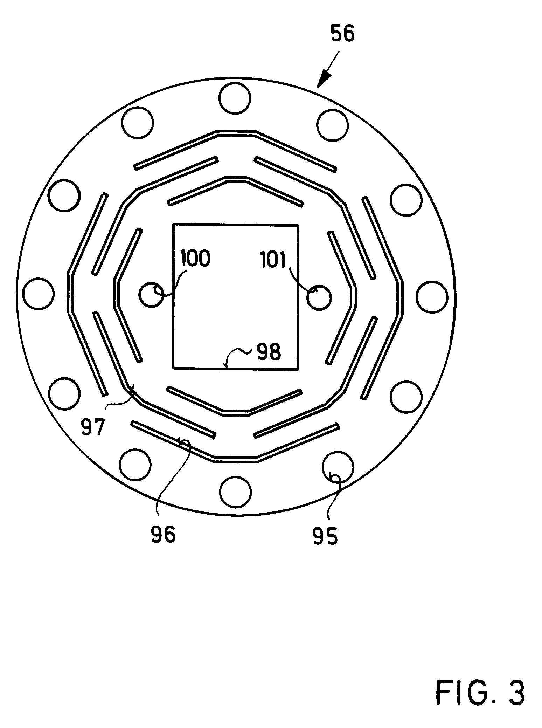

Mit der FIGUR 3 ist eine Ansicht der Membranfeder 56 dargestellt. Sie weist im äußeren Umfangsbereich Bohrungen 95 auf, die den Zapfen 52, 53 der Stützhülse 51 zugeordnet sind. Ferner sind schlitzförmige Durchbrüche 96, 97 in Umfangsrichtung versetzt zueinander vorgesehen. Eine mit 98 bezeichnete, zentrale Aussparung dient der Aufnahme der Membranfeder 56 auf einer der Aussparung 98 entsprechenden, am Halter 81 ausgebildeten Kontur 99 (FIGUR 1). Für die Verbindung mit dem Halter 81 sind Bohrungen 100 und 101 angebracht, die zusammen mit am Halter 81 ausgebildeten Zapfen eine Warmstauchverbindung ermöglichen. In ähnlicher Weise ist auch die Membranfeder 59 mit dem Halter 81 verbunden, wobei jedoch wegen des flachen Querschnitts der Spule 65 die Membranfeder 59, abgesehen von den Bohrungsabständen am äußeren Rand, mit einer anders gestalteten, zentralen Aussparung versehen ist. Selbstverständlich ist es auch denkbar, die schlitzförmigen Durchbrüche 96, 97 anders auszubilden, beispielsweise kreisbogenförmig. Ferner ist es denkbar, die Membranfedern als punksymmetrisch gewellte Scheiben auszubilden.

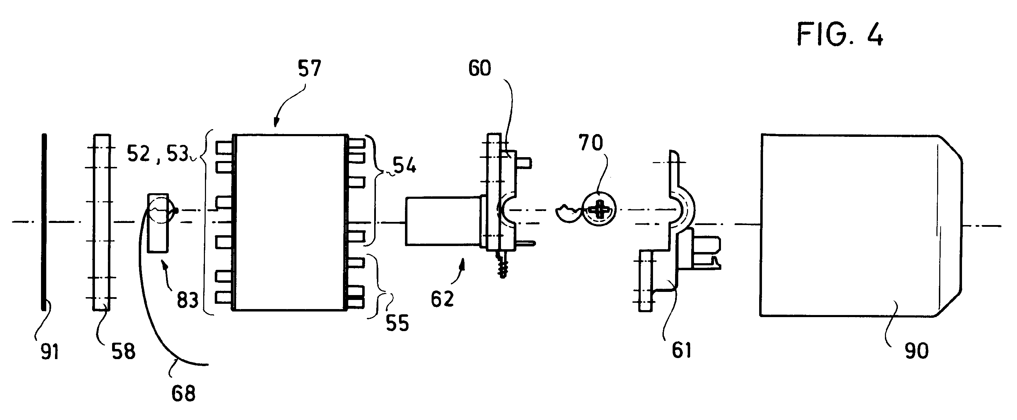

Die FIGUR 4 zeigt die Bauteile und Baugruppen des bevorzugten Beschleunigungsgebers 50 in einer der Montage entsprechenden gegenseitigen Zuordnung. Vorzugsweise werden, ausgehend von der in FIGUR 4 dargestellten Situation, bei der Montage des Beschleunigungsgebers 50 als ersten Schritt die vormontierte Feder-Masse-Baugruppe 57 und die aus dem Träger 60 und der Spulenanordnung 62 bestehende Baugruppe miteinander verbunden. Dabei läßt, was für ein zweifelsfreies, gegenseitiges Ausrichten des Luftspalts 66 und des Wickelkörpers 83 entscheidend ist, die ungleiche Teilung der Zapfen 54 nur eine einzige Stellung der beiden Baugruppen zueinander zu. Danach wird das freie Ende des auf dem Wickelkörper 83 aufgewickelten Bandes 68 durch den Spalt 66, 67 gefädelt und der Wickelkörper 83 in die Kulisse 86 im Halter 81 der Feder-Masse-Baugruppe 57 lose eingesetzt. Als nächsten Schritt wird das aus dem Träger 60 herausragende Bandende am Wickeldorn 70 befestigt und aufgewickelt und der Wickeldorn 70 in die im Träger 60 vorgesehene Lagerschale 69 eingelegt. Es folgt das Aufsetzen und Befestigen der Abdeckung 61, mit der die Lagerung des Wickeldorns 70 und die Steckverbindung vervollständigt wird. Danach wird, um die Membranfeder 56 vor dem Spannen des Bandes 68 festzulegen, das Bodenteil 58 an der Feder-Masse-Baugruppe 57 angeflanscht und durch Warmstauchen der Zapfen 52, 53 befestigt. Beim nachfolgenden Spannen des Bandes 68 durch Drehen des Wickeldorns 70 werden die Membranfedern 56 und 59 in axialer Richtung verformt. Die Justierung der erforderlichen Zugkraft in dem Band 68 und somit der Lage des Arbeitspunktes des Beschleunigungsgebers 50 erfolgt durch Messen der elektromagnetischen Eigenschaften von Spulenanordnung 62 und Meßkörper (Band 68) und/oder durch mechanisches Abtasten der Lage der Membranfeder 56, wobei diese durch eine geeignete Öffnung im Bodenteil 58 zugänglich ist. Nach dem Justieren der Vorspannung des Bandes 68 werden der Wickeldorn 70 und die während des Spannens als Bremse dienende Abdeckung 61 miteinander verschweißt, der Geber in das Gehäuse 90 eingeführt und das Gehäuse 90 mit der Platte 91 am Bodenteil 58 verbördelt.

Die Befestigung des Beschleunigungsgebers 50 beispielsweise an der Chassiswand eines Fahrzeuges kann - der Raumbedarf des Beschleunigungsgebers 50 beträgt ungefähr 7 cm³ - problemlos durch Kleben erfolgen, wobei der Beschleunigungsgeber entweder stirnseitig angeflanscht oder in eine geeignete Öffnung eingesetzt wird. Denkbar ist ferner, daß der Beschleunigungsgeber 50 unter Einsparung der Steckerfassung 75 unmittelbar auf einer Leiterplatte angeordnet wird, welche die für die Signalaufbereitung erforderliche Elektronik trägt.

## Patentansprüche

1. Beschleunigungsgeber mit einer Feder-Masse-Baugruppe (57), einer Spulenanordnung (62) und einem bandförmigen Meßkörper (68) aus amorphem, magneto-elastischem Metall, wobei ein Ende des mit der Spulenanordnung (62) elektromagnetisch gekoppelten Meßkörpers (68) mit der Masse (81, 82) und das andere Ende mit einem relativ zur Spulenanordnung (62) unbeweglichen Bauteil des Beschleunigungsgebers (50) verbunden ist und wobei die Masse (81, 82), die eine zentrale Freisparung (88) aufweist, die größer ist, als die Außenkonturen der Spulenanordnung (62), die Spulenanordnung (62) wenigstens teilweise umgreift
dadurch gekennzeichnet,
daß die Feder-Masse-Baugruppe (57) zwei Membranfedern (56, 59) aufweist, welche parallel zueinander an der Masse (81, 82) befestigt sind und an welchen die Masse (81, 82) relativ zur Spulenanordnung (62) beweglich aufgehängt ist,
daß den Membranfedern (56, 59) eine Stützhülse (51) zugeordnet ist, deren Länge dem gegenseitigen Abstand der Membranfedern (56, 59) und deren Außendurchmesser dem Durchmesser der Membranfedern (56, 59) entspricht und
daß ein mit der Stützhülse (51) verbindbarer Träger (60) vorgesehen ist, an welchem Mittel (64) für eine freitragende Aufnahme der Spulenanordnung (62) sowie zur Befestigung des einen Endes des Bandes (68) ausgebildet sind.

2. Beschleunigungsgeber nach Anspruch 1,
dadurch gekennzeichnet,
daß als Membranfeder (z. B. 56) eine im wesentlichen ebene Scheibe vorgesehen ist, in welcher schlitzförmige Durchbrüche (96, 97) ausgebildet sind.

3. Beschleunigungsgeber nach Anspruch 1,
dadurch gekennzeichnet,
daß die Membranfeder als eine punktsymmetrisch gewellte Scheibe ausgebildet ist.

4. Beschleunigungsgeber nach Anspruch 1,
dadurch gekennzeichnet,
daß die Spulenanordnung (62) einen an dem Träger (60) ausgebildeten Aufnahmezapfen (64) vorsieht, an welchem eine Spule (65) angeformt ist.

5. Beschleunigungsgeber nach Anspruch 1,
dadurch gekennzeichnet,
daß an der Stützhülse (51) stirnseitig Zapfen (52, 53, 54, 55) angeformt sind und
daß in den Membranfedern (56, 59), im Träger (60) und in einem den Beschleunigungsgeber (50) auf der Gegenseite des Trägers (60) abschließenden Bodenteil (58) den Zapfen (52, 53, 54, 55) zugeordnete Öffnungen ausgebildet sind.

6. Beschleunigungsgeber nach Anspruch 5,
dadurch gekennzeichnet,
daß die Öffnungen im Träger (60) und im Bodenteil (58) als Durchgangsbohrungen ausgebildet sind und
daß die gegenseitige Verbindung der Feder-Masse-Baugruppe (57), des Trägers (60) und des Bodenteils (58) durch Warmstauchen der durch die Durchgangsbohrungen hindurchgreifenden Zapfen (52, 53, 54, 55) erfolgt.

7. Beschleunigungsgeber nach Anspruch 1,
dadurch gekennzeichnet,
daß zur Befestigung des Bandendes am Träger (60) ein Wickeldorn (70) vorgesehen ist,
daß an dem Träger (60) eine dem Wickeldorn (70) zugeordnete erste Lagerschale (69) ausgebildet ist und
daß eine Abdeckung (61) vorgesehen ist, welche eine zweite Lagerschale (79) und Mittel für eine Befestigung an einem unbeweglichen Bauteil des Beschleunigungsgebers (50) aufweist.

8. Beschleunigungsgeber nach Anspruch 7,
dadurch gekennzeichnet,
daß der Träger (60) und die Abdeckung (61) an ein und derselben Stirnseite der Stützhülse (51) mit der Stützhülse (51) verbunden sind.

9. Beschleunigungsgeber nach Anspruch 7,
dadurch gekennzeichnet,
daß in der Abdeckung (61) eine Steckerfassung (75) ausgeformt ist.

10. Beschleunigungsgeber nach Anspruch 1,
dadurch gekennzeichnet,
daß ein haubenförmiges, mit einer stirnseitigen Platte (91) kombiniertes Gehäuse (90) aus magnetisch hochleitfähigem Werkstoff vorgesehen und an dem Bodenteil (58) des Beschleunigungsgebers (50) befestigt ist.

## Claims

1. Acceleration sensor with a spring-mass assembly (57), a coil arrangement (62) and a measuring element (68) in the form of a band of amorphous magneto-elastic metal, one end of the measuring element (68), which is electromagnetically connected to the coil arrangement (62), being connected to the mass (81, 82) and the other end being connected to a component of the acceleration sensor (50) which is fixed with respect to the coil arrangement (62), and the mass (81, 82), which has a central aperture (88) larger than the external contours of the coil arrangement (62), at least partially surrounding the coil arrangement (62), characterised in that the spring-mass assembly (57) has two membrane springs (56, 59) which are fixed to the mass (81, 82) parallel to each other and on which the mass (81, 82) is suspended so that it can move with respect to the coil arrangement (62), in that a supporting sleeve (51) equal in length to the mutual distance between the membrane springs (56, 59) and having an outer diameter equal to the diameter of the membrane springs (56, 59) is associated with the membrane springs (56, 59), and in that a support (60) which can be connected to the supporting sleeve (51) is provided and on this are constructed means (64) of freely bearing and accepting the coil arrangement (62) and of fastening the one end of the band (68).

2. Acceleration sensor according to Claim 1, characterised in that the membrane spring (e.g. 56) comprises a substantially flat disc in which slot-shaped openings (96, 97) are constructed.

3. Acceleration sensor according to Claim 1, characterised in that the membrane spring is constructed as a point-symmetrically corrugated disc.

4. Acceleration sensor according to Claim 1, characterised in that the coil arrangement (62) has a locating peg (64) constructed on the support (60) and a coil (65) is moulded onto this peg (64).

5. Acceleration sensor according to Claim 1, characterised in that pegs (52, 53, 54, 55) are moulded onto the end face of the supporting sleeve (51) and in that openings associated with the pegs (52, 53, 54, 55) are provided in the membrane springs (56, 59), in the support (60) and in a base (58) which closes off the acceleration sensor (50) on the side opposite the support (60).

6. Acceleration sensor according to Claim 5, characterised in that the openings in the support (60) and the base (58) are constructed as through holes and in that the mutual connection of the spring-mass assembly (57), the support (60) and the base (58) is achieved by hot-heading the pegs (52, 53, 54, 55) which project through the through holes.

7. Acceleration sensor according to Claim 1, characterised in that a winding spindle (70) is provided for fastening the end of the band to the support (60), in that a first bearing shell (69) associated with the winding spindle (70) is formed on the support (60) and in that a cover (61) is provided which has a second bearing shell (79) and means for a fastening to a fixed component of the acceleration sensor (50).

8. Acceleration sensor according to Claim 7, characterised in that the support (60) and the cover (61) are connected to the supporting sleeve (51) on one and the same front surface of the supporting sleeve (51).

9. Acceleration sensor according to Claim 7, characterised in that a plug socket (75) is moulded in the cover (61).

10. Acceleration sensor according to Claim 1, characterised in that a domed housing (90) combined with a plate (91) on the front, the housing (90) being made out of a magnetically highly conductive material, is provided and is fastened to the base (58) of the acceleration sensor (50).

## Revendications

1. Transmetteur d'accélération avec un sous-ensemble ressort-masse (57), un dispositif à bobine (62) et un organe de mesure en forme de bande (68) fait en un métal magnéto-élastique amorphe, une extrémité de l'organe de mesure (68), qui est couplé, par voie électromagnétique, avec le dispositif à bobine (62) étant reliée à la masse (81, 82) et l'autre extrémité à un composant du transmetteur d'accélération (50) immobile par rapport au dispositif à bobine (62) et la masse (81, 82), qui présente un évidement central (88), dont les dimensions sont supérieures aux contours extérieurs du dispositif à bobine (62) enveloppant, au moins partiellement, ledit dispositif à bobine,
caractérisé par le fait
que le sous-ensemble ressort-masse (57) présente deux ressorts à diaphragme (56, 59) qui sont fixés, parallèlement l'un par rapport à l'autre, sur la masse (81, 82) et sur lesquels la masse (81, 82) est suspendue mobile par rapport au dispositif à bobine (62),
qu'aux ressorts à diaphragme (56, 59) est associée une douille d'appui (51) dont la longueur correspond à la distance réciproque des ressorts à diaphragme (56, 59) et son diamètre extérieur au diamètre desdits ressorts à diaphragme (56, 59)
qu'il est prévu, pour pouvoir être relié à la douille d'appui (51), un support (60) sur lequel sont formés des moyens (64) pour un logement en porte-à-faux du dispositif à bobine (62) ainsi que pour la fixation de l'une des extrémités de la bande (68).

2. Transmetteur d'accélération selon la revendication 1,
caractérisé par le fait
que comme ressort à diaphragme (par exemple 56) est prévue une rondelle pour l'essentiel plane dans laquelle sont pratiqués des percements en forme de fentes (96, 97).

3. Transmetteur d'accélération selon la revendication 1,
caractérisé par le fait
que le ressort à diaphragme est réalisé sous la forme d'une rondelle à ondulation à symétrie ponctuelle.

4. Transmetteur d'accélération selon la revendication 1,
caractérisé par le fait
que le dispositif à bobine (62) prévoit, formé sur le support (60), un tenon récepteur (64) sur lequel est formé une bobine (65).

5. Transmetteur d'accélération selon la revendication 1,
caractérisé par le fait
que sur la douille d'appui (51) sont formés frontalement des tenons (52, 53, 54, 55) et
que dans les ressorts à diaphragme (56, 59), dans le support (60) et dans un élément de base (58) fermant le transmetteur d'accélération (50) sur la face opposée dudit support (60), sont prévues des ouvertures associées aux tenons (52, 53, 54, 55).

6. Transmetteur d'accélération selon la revendication 5,
caractérisé par le fait
que les ouvertures dans le support (60) et dans l'élémént de base (58) sont réalisées comme alésages de passage et que l'assemblage réciproque du sous-ensemble ressort-masse (57), du support (60) et de l'élément de base (58) s'opère par écrasement à chaud des tenons (52, 53, 54, 55) traversant lesdits alésages de passage.

7. Transmetteur d'accélération selon la revendication 1,
caractérisé par le fait
que, pour la fixation de l'extrémité de bande sur le support (60) est prévu un mandrin de bobinage (70),
que sur le support (60) est formée une première coquille de coussinet (69) associée audit mandrin de bobinage (70) et
qu'il est prévu un recouvrement (61) qui présente une seconde coquille de coussinet (79) et des moyens pour une fixation sur un composant immobile du transmetteur d'accélération (50).

8. Transmetteur d'accélération selon la revendication 7,
caractérisé par le fait
que le support (60) et le recouvrement (61) sont reliés, sur la même face frontale de la douille d'appui (51), à ladite douille d'appui (51).

9. Transmetteur d'accélération selon la revendication 7,
caractérisé par le fait
que dans le recouvrement (61) est formée une douille de connecteur (75).

10. Transmetteur d'accélération selon la revendication 1,
caractérisé par le fait
qu'il est prévu, combiné avec une plaque frontale (91), un boîtier en forme de capot (90) fait en un matériau à haute conductibilité magnétique et fixé sur l'élément de base (58) du transmetteur d'accélération (50).
